# FASCICULE DE BREVET EUROPEEN

(11) **EP 0 442 764 B1**
(45) Date de publication et mention de la délivrance du brevet: **15.09.1993**
(21) Numéro de dépôt: 91400017.9
(22) Date de dépôt: 04.01.1991
(51) Int. Cl.: F16F 13/00

(54) **Articulation hydroélastique à double effet à armatures concentriques**
Doppelwirkendes hydroelastisches Gelenk mit konzentrischen Armaturen
Double action hydroelastic joint with concentric mounting elements

(30) Priorité: 15.02.1990 FR 9001838
(43) Date de publication de la demande: 21.08.1991
(73) Titulaire: AUTOMOBILES PEUGEOT, 75116 Paris (FR); AUTOMOBILES CITROEN, 92200 Neuilly-sur-Seine (FR)
(72) Inventeur: Le Fol,Marcel, F-35410 Domloup (FR); Poupard,Dominique, F-92370 Chaville (FR)
(74) Mandataire: Moncheny, Michel

(56) Documents cités:
- US-A- 4 738 435
- PATENT ABSTRACTS OF JAPAN vol. 9, no. 268 (M-424)() 25 octobre 1985, & JP-A-60 113836 (TOYOTA JIDOSHA KK) 20 juin 1985,
- PATENT ABSTRACTS OF JAPAN vol. 11, no. 120 (M-580)(2567) 15 avril 1987, & JP-A-61 262244 (BRIDGESTONE CORPORATION) 20 novembre 1987,

## Description

La présente invention concerne les supports ou articulations hydroélastiques utilisés notamment dans l'industrie automobile.

De façon plus précise, l'invention concerne une articulation élastique destinée à amortir principalement des efforts radiaux, c'est-à-dire exercés sensiblement perpendiculairement à l'axe de l'articulation. Un exemple de support connu peut être trouvé dans le document JP-A-60 113 836 qui décrit un support comprenant deux armatures tubulaires concentriques, respectivement intérieure et extérieure, reliées par une masse d'un matériau élastique qui délimite deux chambres contenant un liquide. Les deux chambres sont mises en communication par plusieurs canaux, disposés en parallèle et dotés d'un dispositif à clapet permettant d'ouvrir ou de fermer au moins l'un desdits canaux.

Un tel agencement est relativement compliqué compte tenu de la présence du dispositif à clapet d'obturation. Sa fiabilité peut donc en être affectée. Par ailleurs, il ne permet pas d'obtenir un filtrage très efficace des vibrations à haute fréquence.

L'invention se propose de fournir un support ou une articulation hydroélastique permettant d'obtenir un meilleur effet de filtrage des vibrations à haute fréquence, et une plage d'amortissement plus large, tout en étant de construction simple et robuste.

A cet effet, l'invention a pour objet une articulation hydroélastique, comprenant deux armatures concentriques, sensiblement coaxiales, constituant une armature extérieure et une armature intérieure, ces deux armatures étant reliées par une masse de matériau élastique, une cloison rigide portée par l'une des armatures, qui s'étend sensiblement perpendiculairement à l'axe des armatures et délimite au moins un conduit, l'articulation comportant au moins deux chambres de travail disposées dans l'intervalle entre les deux armatures et délimitées en partie par la masse de matériau élastique, ces deux chambres étant remplies de liquide et pouvant communiquer à travers ledit conduit. Suivant l'invention, la cloison rigide est portée par l'armature extérieure et comporte dans une zone centrale un élément de paroi mobile axialement entre deux butées, le conduit étant délimité dans la partie de la cloison comprise entre ladite zone centrale et la périphérie de cette cloison, et une chambre de transfert, remplie de liquide, est délimitée du côté de la cloison opposé à celui où se trouvent les deux chambres de travail, ledit conduit faisant communiquer la chambre de transfert avec l'une des chambres de travail, la cloison comportant un deuxième conduit qui fait communiquer la chambre de transfert avec l'autre chambre de travail.

Suivant d'autres caractéristiques :
- la masse de matériau élastique comprend deux bras et des parois souples qui s'étendent entre les deux armatures intérieure et extérieure et qui séparent le volume compris entre les deux armatures en deux zones délimitant les chambres de travail.
- l'une des chambres de travail est délimitée à son extrémité éloignée de la cloison par une paroi souple s'étendant entre les deux armatures alors que l'autre chambre de travail est délimitée à ses extrémités axiales par deux parois souples.

L'invention va être décrite plus en détail ci-dessous en se référant aux dessins annexés, donnés uniquement à titre d'exemples et sur lesquels :
La Fig. 1 est une vue schématique illustrant un exemple d'implantation d'une articulation selon l'invention dans un véhicule automobile;
La Fig. 2 est une vue en coupe longitudinale d'un mode de réalisation d'une telle articulation suivant l'invention;
Les Fig. 3, 4 et 5 sont respectivement des vues en coupe suivant les lignes 3-3 (couvercle enlevé), 4-4 et 5-5 de la Fig.2.

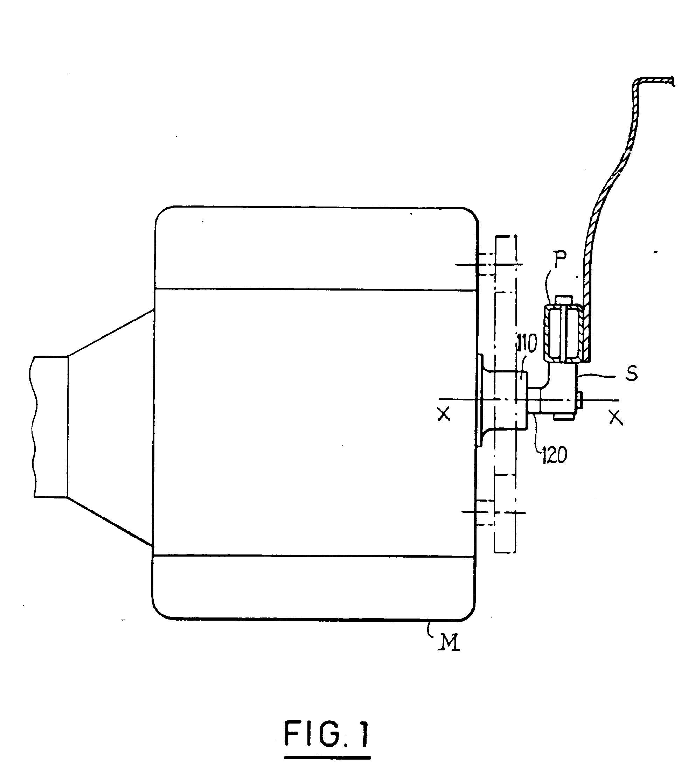

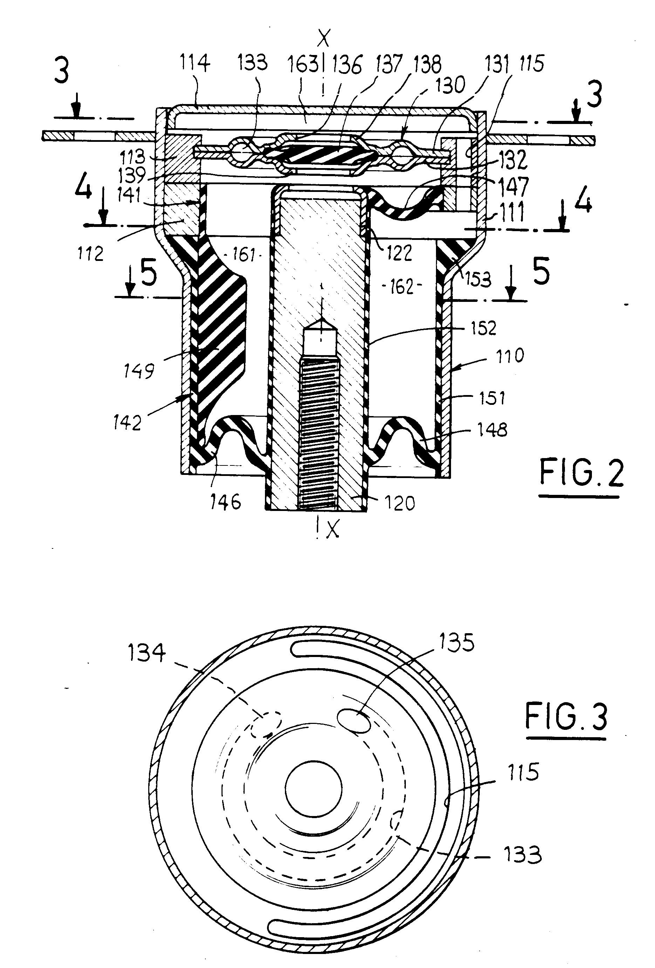

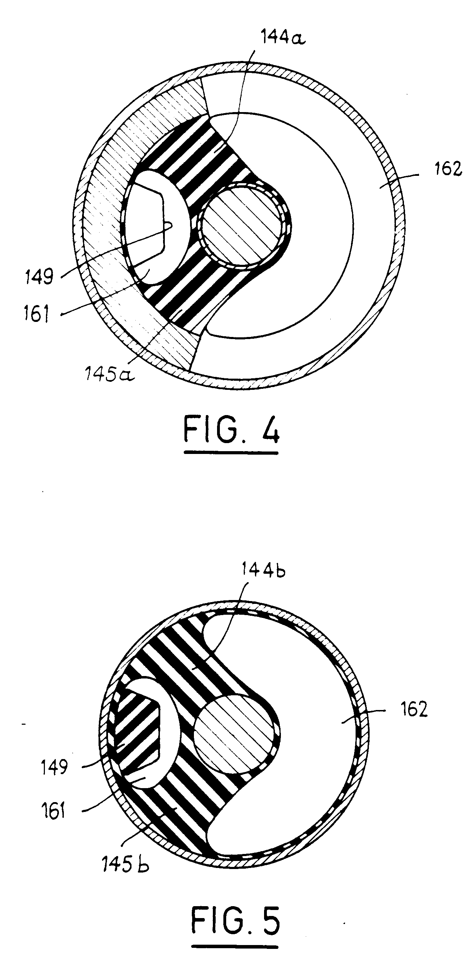

L'articulation représentée aux Fig. 2 à 5 est destinée à être interposée entre deux organes ou sous-ensembles, notamment dans un véhicule, dont les déplacements relatifs doivent être amortis. Comme représenté à la Fig. 1, elle peut être interposée entre un moteur M et une poutre P faisant partie de la structure du véhicule. L'articulation est disposée avec son axe X-X sensiblement horizontal et reliée par un support S à la poutre P.

L'articulation représentée aux Fig. 2 à 5 est à double effet. Elle comprend une armature extérieure 110 et une armature intérieure 120 concentriques munies chacune de moyens de fixation sur l'un des deux organes ou ensembles à relier.

L'armature extérieure de forme générale tubulaire cylindrique comporte à une extrémité une partie 111 de diamètre plus important, dans laquelle sont reçus, d'une part, une pièce annulaire 112 sur laquelle est moulée une partie d'une masse en élastomère reliant les deux armatures, qui sera décrite plus en détail ci-après, et, d'autre part, un support en plastique moulé 113 portant une cloison rigide 130 constituée dans l'exemple représenté par deux plaques embouties accolées 131, 132. Cette cloison délimite un conduit 133 annulaire disposé au voisinage de sa périphérie, ce conduit débouchant de part et d'autre de la cloison par deux orifices 134 et 135 espacés circonférentiellement.

La cloison 130 délimite dans sa partie centrale un logement 136 débouchant sur ses deux faces, pour un élément de paroi mobile ou clapet 137 réalisé en élastomère. Ce clapet est serré à sa périphérie entre les deux plaques 131, 132 et sa partie centrale peut débattre avec un jeu relativement faible entre deux sièges 138, 139 délimités par la cloison.

A sa partie supérieure sur le dessin, cette extrémité de l'armature extérieure est fermée par un couvercle 114 fixé par tous moyens convenables.

Comme on le voit sur la Fig. 3, la pièce 112 et le support 113 délimitent un canal de transfert 115 faisant communiquer les deux côtés de la cloison 130.

Du côté de la cloison opposé au couvercle 114, le volume délimité entre les armatures intérieure et extérieure est séparée en deux chambres par une masse en élastomère réalisée ici en deux parties 141, 142.

La première partie 141 fixée entre la pièce 112 et une coupelle 122 fixée à l'extrémité de l'armature interne 120 comprend deux bras 144^{a}, 145^{a} s'étendant radialement entre l'armature intérieure et l'armature extérieure et dont la longueur axiale est à peu près égale à l'épaisseur de la pièce 112. Ces deux bras séparent le volume compris entre les deux armatures en deux zones ayant de préférence des sections différentes. La zone de section la plus importante est fermée par une paroi souple 147 tandis que dans la zone de section moins importante, la pièce en élastomère est prolongée axialement par une masse 149 destinée à servir de butée pour limiter le déplacement relatif entre les deux armatures.

La deuxième pièce 142 constituant la masse en élastomètre comprend deux jupes concentriques 151, 152 reliées respectivement aux deux armatures, la jupe extérieure se terminant par un bourrelet 153. Cette pièce comporte également deux bras 144^{b}, 145^{b} disposés dans le prolongement des bras 144^{a}, 145^{a} de la pièce 141, qui sont adaptés pour s'ajuster de façon étanche sur ces derniers, ainsi que deux parois souples 146, 148 s'étendant entre les deux jupes intérieure et extérieure.

Cette articulation comporte donc deux chambres de travail 161, 162, qui peuvent chacune communiquer avec une chambre de transfert 163 disposée de l'autre côté de la cloison rigide 130, la chambre 161 communiquant avec la chambre de transfert par le conduit 133 tandis que la seconde chambre 162 communique avec la chambre de transfert par le canal 115.

Le fonctionnement de cette articulation est le suivant : les vibrations à haute fréquence et faible amplitude sont absorbées par le déplacement de l'élément de paroi mobile 137 porté par la cloison rigide 130.

Compte tenu de la disposition de la cloison 130, portée par l'armature extérieure et décalée axialement par rapport à l'armature intérieure, cet élément de paroi mobile peut avoir une grande surface, ce qui améliore l'effet de filtrage de ce type de vibrations.

Les vibrations ou déplacements de plus basse fréquence provoquent, selon la direction dans laquelle l'articulation est sollicitée, un pompage et un déplacement de liquide de l'une des chambres de travail 161, 162 à l'autre, par l'intermédiaire de la chambre de transfert 163, du conduit 133 et du canal 115.

Une telle réalisation offre, par rapport à des articulations classiques, une caractéristique d'amortissement plus large.

Par ailleurs, la butée 149 limite le déplacement radial relatif entre les deux armatures et évite un éventuel phénomène de cavitation.

Il est à noter de plus qu'une telle articulation offre un encombrement radial plus faible que les supports de construction classique dont les axes sont sensiblement parallèles à la direction générale des efforts auxquels ils sont soumis.

## Revendications

1. Articulation hydroélastique comprenant deux armatures concentriques (110, 120), sensiblement coaxiales, constituant une armature extérieure et une armature intérieure, ces deux armatures étant reliées par une masse (141, 142) de matériau élastique, une cloison rigide (130) portée par l'une des armatures, qui s'étend sensiblement perpendiculairement à l'axe (X-X) des armatures et délimite au moins un conduit (133) l'articulation comportant au moins deux chambres de travail (161, 162) disposées dans l'intervalle entre les deux armatures et délimitées en partie par la masse de matériau élastique, ces deux chambres étant remplies de liquide et pouvant communiquer à travers ledit conduit, caractérisée en ce que la cloison rigide est portée par l'armature extérieure (120) et comporte dans une zone centrale un élément de paroi (137) mobile axialement entre deux butées, le conduit (133) étant délimité dans la partie de la cloison comprise entre ladite zone centrale et la périphérie de cette cloison, et une chambre de transfert (163) remplie de liquide étant délimitée du côté de la cloison opposé à celui où se trouvent les deux chambres de travail (161, 162), ledit conduit (133) faisant communiquer la chambre de transfert (163) avec l'une (161) des chambres de travail, la cloison (130) comportant un deuxième conduit (115) qui fait communiquer la chambre de transfert (163) avec l'autre chambre de travail (162).

2. Articulation selon la revendication 1, caractérisée en ce que la masse de matériau élastique (141, 142) comprend deux bras (144, 145) et des parois souples (146, 147, 148) qui s'étendent entre les deux armatures intérieure et extérieure et qui séparent le volume compris entre les deux armatures en deux zones délimitant les chambres de travail (161, 162).

3. Articulation selon l'une quelconque des revendications 1 et 2, caractérisée en ce que l'une (161) des chambres de travail s'étend axialement entre la cloison rigide et deux parois souples (146, 147) disposées entre les armatures (110, 120) et situées l'une (147) au voisinage de la cloison (130) et l'autre (146) à une certaine distance de cette cloison.

4. Articulation selon la revendication 3, caractérisée en ce que l'autre chambre de travail (162) est délimitée axialement entre deux parois souples (147, 148) reliant les deux armatures.

5. Articulation selon l'une quelconque des revendications 1 à 4, caractérisée en ce que la cloison rigide (130) est complétée par au moins une pièce annulaire (112, 113) sur laquelle est fixée une paroi souple (147), fixée par ailleurs sur l'armature interne, et qui délimite dans une zone située radialement à l'extérieur de ladite paroi, le deuxième conduit (115).

6. Articulation selon la revendication 5, caractérisée en ce que le deuxième conduit est un canal (115) de faible longueur et de grande section.

7. Articulation selon l'une quelconque des revendications précédentes, caractérisée en ce qu'elle comporte au moins une butée en élastomère (149) limitant les débattements radiaux entre les deux armatures.

8. Articulation selon l'une quelconque des revendications précédentes, caractérisée en ce que la cloison rigide (130) est disposée dans une partie d'extrémité de section élargie de l'armature extérieure (110).

## Patentansprüche

1. Hydroelastisches Gelenk mit zwei konzentrischen Armaturen (110,120), die im wesentlichen koaxial angeordnet sind und eine äußere Armatur und eine innere Armatur bilden, welche zwei Armaturen durch eine Masse (141,142) aus elastischen Material verbunden sind, und mit einer von einer der Armaturen getragenen starren Trennwand (130), die sich im wesentlichen senkrecht zu der Achse (X-X) der Armaturen erstreckt und wenigstens eine Leitung (133) abgrenzt, welches Gelenk wenigstens zwei Arbeitskammern (161,162) aufweist, die in dem Zwischenraum zwischen den beiden Armaturen angeordnet und teilweise durch die Masse aus elastischem Material abgrenzt sind, welche zwei Kammern mit Flüssigkeit gefüllt sind und miteinander durch diese Leitung kommunizieren können, dadurch **gekennzeichnet**, daß die starre Trennwand von der äußeren Armatur (120) getragen wird und in einem Mittelbereich ein axial zwischen zwei Anschlägen bewegliches Wandelement (137) aufweist, daß die Leitung (133) in dem Teil der Trennwand ausgebildet ist, der zwischen diesem Mittelbereich und dem Umfang dieser Trennwand liegt, und daß eine mit Flüssigkeit gefüllte Übertragungskammer (163) auf der Seite der Trennwand abgegrenzt ist, die derjenigen gegenüberliegt, auf der sich die beiden Arbeitskammern (161, 162) befinden, daß die Leitung (133) die Übertragungskammer (163) mit einer (161) der Arbeitskammern verbindet und daß die Trennwand (130) eine zweite Leitung (115) aufweist, die die Übertragungskammer (163) mit der anderen Arbeitskammer (162) verbindet.

2. Gelenk nach Anspruch 1, dadurch **gekennzeichnet,** daß die Masse (141,142) aus elastischem Material zwei Arme (144,145) und flexible Wände umfaßt (146,147,148), die sich zwischen der inneren und der äußeren Armatur erstrecken und die das zwischen den beiden Armaturen enthaltene Volumen in zwei die Arbeitskammern (161,162) darstellende Bereiche unterteilen.

3. Gelenk nach Anspruch 1 oder 2, dadurch **gekennzeichnet,** daß sich die eine Arbeitskammer (161) axial zwischen der starren Trennwand und zwei flexiblen Wänden (146,147) erstreckt, die zwischen den Armaturen (110,120) angeordnet sind und von denen die eine Wand (147) in der Nähe der Trennwand (130) und die andere Wand (146) in einer bestimmten Entfernung von dieser Trennwand liegt.

4. Gelenk nach Anspruch 3, dadurch **gekennzeichnet**, daß die andere Arbeitskammer (162) axial zwischen zwei die beiden Armaturen verbindenden flexiblen Wänden (147,148) abgegrenzt ist.

5. Gelenk nach einem der Ansprüche 1 bis 4, dadurch **gekennzeichnet**, daß die starre Trennwand (130) durch wenigstens ein ringförmiges Teil (112,113) ergänzt ist, auf dem eine flexible Wand (147) befestigt ist, die andererseits an der inneren Armatur befestigt ist, und das in einem radial außerhalb dieser Wand gelegenen Bereich die zweite Leitung (115) abgrenzt.

6. Gelenk nach Anspruch 5, dadurch **gekennzeichnet**, daß die zweite Leitung ein Kanal (115) von geringer Länge und großem Querschnitt ist.

7. Gelenk nach einem der vorhergehenden Ansprüche, **gekennzeichnet**, durch wenigstens einen Anschlag (149) aus Elastomer, der die radialen Durchfederungswege zwischen den beiden Armaturen begrenzt.

8. Gelenk nach einen der vorhergehenden Ansprüche, dadurch **gekennzeichnet**, daß die starre Trennwand (130) in einem Endbereich mit erweitertem Querschnitt der äußeren Armatur (110) angeordnet ist.

## Claims

1. Hydroelastic articulation comprising two substantially coaxial, concentric structures (110, 120) constituting an outer structure and an inner structure, these two structures being connected by a mass (141, 142) of elastic material, a rigid partition (130) carried by one of the structures, which extends substantially perpendicularly to the axis (X-X) of the structures and defines at least one duct (133), the articulation comprising at least two working chambers (161, 162) arranged in the space between the two structures and partly defined by the mass of.elastic material, these two chambers being filled with liquid and able to communicate through said duct, characterised in that the rigid partition is carried by the outer structure (120) and comprises, in a central zone, a wall element (137) which is axially movable between two abutments, the duct (133) being defined in that part of the partition contained between said central zone and the periphery of said partition, and a transfer chamber (163) full of liquid being defined on the side of the partition opposite the side where the two working chambers (161, 162) are located, said duct (133) causing the transfer chamber (163) to communicate with one (161) of the working chambers, the partition (130) having a second duct (115) which causes the transfer chamber (163) to communicate with the other working chamber (162).

2. Articulation according to claim 1, characterised in that the mass of elastic material (141, 142) comprises two arms (144, 145) and flexible walls (146, 147, 148) which extend between the two inner and outer structures and which separate the volume contained between the two structures into two zones defining the working chambers (161, 162).

3. Articulation according to any one of claims 1 and 2, characterised in that one (161) of the working chambers extends axially between the rigid partition and two flexible walls (146, 147) arranged between the structures (110, 120) and located with one (147) in the vicinity of the partition (130) and the other (146) at a certain spacing from this partition.

4. Articulation according to claim 3, characterised in that the other working chamber (162) is defined axially between two flexible walls (147, 148) connecting the two structures.

5. Articulation according to any of claims 1 to 4, characterised in that the rigid partition (130) is completed by at least one annular member (112, 113) to which is fixed a flexible wall (147) which is also attached to the inner structure and which defines the second duct (115) in a zone located radially outside said wall.

6. Articulation according to claim 5, characterised in that the second duct is a short channel (115) of large cross-section.

7. Articulation according to any of the preceding claims, characterised in that it has at least one elastomeric abutment (149) limiting the radial movements between the two structures.

8. Articulation according to any one of the preceding claims, characterised in that the rigid partition (130) is arranged in an end part, of wider cross-section, of the outer structure (110).
